# EUROPEAN PATENT SPECIFICATION

(11) **EP 2 739 026 B1**
(45) Date of publication and mention of the grant of the patent: **05.07.2017**
(21) Application number: 11865435.9
(22) Date of filing: 18.08.2011
(51) Int. Cl.: H04M 3/46

(54) **METHOD AND SYSTEM FOR IMPLEMENTING GROUP CALL IN CLICK TO DIAL SERVICE**
VERFAHREN UND SYSTEM ZUR IMPLEMENTIERUNG GRUPPENRUFE IN EINEM KLICKEN ZUM WÄHLEN DIENST
PROCÉDÉ ET SYSTÈME DE MISE EN OEUVRE D'APPEL DE GROUPE DANS UN SERVICE CLIQUER POUR COMPOSER

(30) Priority: 25.07.2011 CN 201110209084
(43) Date of publication of application: 04.06.2014
(73) Proprietor: ZTE Corporation, Shenzhen, Guangdong 518057 (CN)
(72) Inventor: QU, Tianxi, Shenzhen Guangdong 518057 (CN); QIAN, Chen, Shenzhen Guangdong 518057 (CN); LI, Ying, Shenzhen Guangdong 518057 (CN); TANG, Hai, Shenzhen Guangdong 518057 (CN)
(74) Representative: Lavoix
(86) International application number: PCT/CN2011/078607
(87) International publication number: WO 2012/151799

(56) References cited:
- CN-A- 101 288 292
- CN-A- 101 594 370
- GB-A- 2 407 228
- US-A1- 2004 120 504

## Description

### TECHNICAL FIELD

The disclosure relates to the field of intelligent network communication in an IP Multimedia Subsystem (IMS) and a Next Generation Network (NGN), and in particular to a method and system for simultaneous ringing and group-calling in a *Click To Dial* (CTD) service.

### BACKGROUND

In the CTD service, a user logs in a CTD WEB interface, and inputs or selects the number of a logic caller or calling party (such as a user A) and the number of a logic callee or called party (such as a user B); a CTD application server first dials/calls the number of the logic caller (user A), and after A answers the call, the CTD application server dials/calls the number of the logic callee (user B); B rings and A hears a ring-back tone; B picks up the call, and then A and B go on to have the phone call with each other. Namely, the CTD service is a calling service by which a connection between the phone numbers of two parties wishing to phone each other is established, such that a phone call between the two parties is implemented.

With a traditional calling service, a call is implemented by directly dialling a target phone number by a user via a UE (such as a fixed phone, a mobile phone, etc.). In CTD calling, the CTD application server dials/calls the phone numbers of two parties needing to phone each other, respectively.

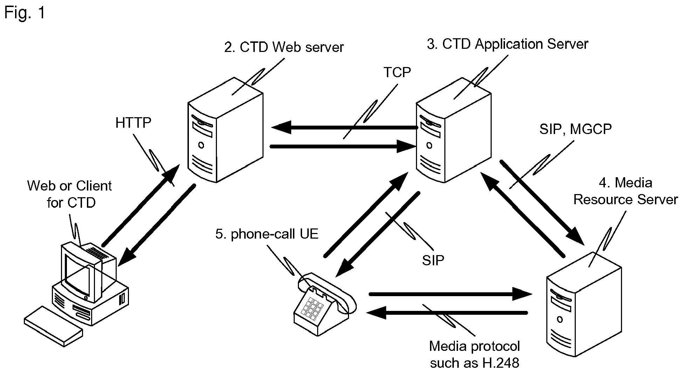

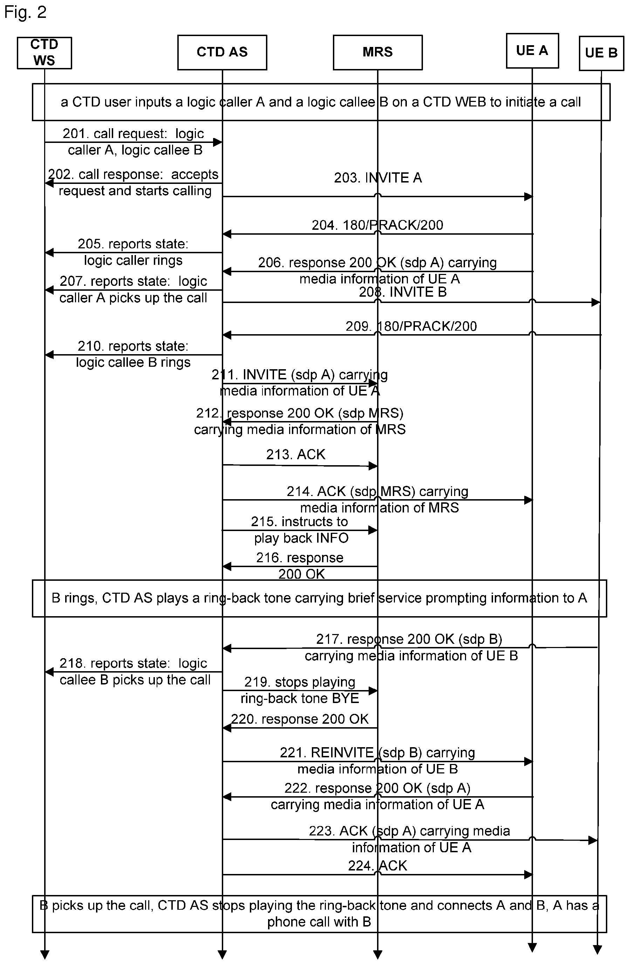

A traditional CTD service is widely used in an existing communication network. For example, WebCall, Web800 and the like are all CTD calling services or derivative services thereof. A user may view, via an operation interface for CTD calling, the current state of a phone call, such as the phone numbers and names of two parties making the phone call, a calling state (such as callee-rings, callee-answers, callee-hangs-up, callee-calling-continues, etc.). Portraits used by the two parties may even be displayed on an interface of the phone call to make the interface look better. The service may be further extended to implement Instance Messaging (IM) between the two parties making the phone call. The structure of a system for the traditional CTD service is as shown in Fig. 1, and a flowchart of signalling therein is as shown in Fig. 2.

Fig. 1 is a flow of implementing the traditional CTD service, a network element therein functions as follows.
1. a Web or Client for CTD is a device provided to the user for initiating or controlling a call, such as PC, a 3G UE, etc.
2. a CTD WEB Server (CTD WS) provides functions such as an HTTP service for CTD calling, user login, fill-out of numbers of a phone call, control of a phone call, and an information displaying interface, etc.
3. a CTD Application Server (CTD AS) provides underlying CTD service capabilities such as call control, state report, call-particular generation, etc.
4. a Media Resource Server (MRS) provides a voice media capability, and is generally a Media Server (MS).
5. a phone-call User End (UE), with which a user makes a phone call, has a specific physical equipment such as a fixed phone, a mobile phone, or a professional UE for video calls, etc.

Usage of specific protocols in the network elements is as follows.
1. HTTP is used to call an HTTP service between a user Web and the CTD WS.
2. As communication between the CTD WS and the CTD AS is inter-server communication, a TCP protocol is used for a transport layer, and an application-layer protocol may be selected to be an XML and the like according to a specific need, and if no application-layer protocol is used, a TCP message body may be customized.
3. Regarding call media negotiation between the CTD AS and the MRS or a UE, an SIP (Session Initiation Protocol) is used for intercommunication between the CTD AD and the UE via a core network, and the SIP or an MGCP (Media Gateway Control Protocol), depending specifically on a protocol type supported by the MRS, is generally used between the CTD AS and the MRS.
4. Regarding media-stream transfer between a UE and the MRS, an encoding/decoding format, a transceiving port, a bandwidth, a transmission rate and the like of a specific media packet between the UE and the MRS depend on the media negotiation between the UE and the MRS at the time of calling.

Note that shown in Fig. 1 is just a schematic diagram showing no network topology of the IMS or the NGN, and in a practical implementation the CTD AS, MRS and UE are connected to the IMS network or NGN network;

Fig. 2 is a flowchart of signalling in the traditional CTD service, wherein the CTD AS first calls a UE A, then calls a UE B, after both the UE A and the UE B pick up the call, a connection between the two users is established so as to implement the phone call between the UE A and the UE B. However, the traditional CTD service can call but a single logic callee, and fails to implement simultaneous ringing and group-calling.

GB 2 407 228 A discloses a method of selectively transferring an incoming call from a first terminal to a second recipient in a communication system, the method comprising setting a plurality of terminals in a group to indicate a call simultaneously; connecting the call to the first terminal of the group to pick up; and stopping the call indication at the remaining terminals as soon as the first picks up.

According to US 2004/120504 A1, a Click to Dial Favorites system maintains a listing of only a subscriber's most frequently accessed telephone numbers to thereby parse the universe of all telephone numbers available to the Click to Dial feature down to a minimal set that are relevant to the subscriber; the Click to Dial Favorites system maintains a record of the incoming and outgoing calls for individual subscribers; on subsequent searches of large telephone directories, the results of the search are compared to the entries in the subscriber's Click to Dial Favorites Database; entries in the search results that have been previously called by the subscriber or have called the subscriber are highlighted; similarly, the results of the search can be filtered to only show the subscriber entries that have been previously called or have called the subscriber.

### SUMMARY

In view of the above, it is desired that an embodiment of the disclosure provides a method and system for simultaneous ringing and group-calling in a CTD service for solving the problem of failure to implement simultaneous ringing and group-calling in an existing CTD service.

To this end, a technical solution of the disclosure is implemented as follows.

The features of the method and system according to the present disclosure are defined in the independent claims, and the preferable features according to the present invention are defined in the dependent claims..

The disclosure discloses a method and system for simultaneous ringing and group-calling in a *Click To Dial* (CTD) service for solving the problem of failure to implement simultaneous ringing and group-calling in an existing CTD service. With the disclosure, a CTD Application Server (CTD AS) performs signalling control, and extension is made from one logic callee to multiple logic called users, such that calling of multiple logic callees can be initiated simultaneously, the multiple logic callees receiving the call ring simultaneously, and once a logic callee picks up the call, the logic callee may have a phone call with the logic caller, and meanwhile any other logic callee not picking up the call is cancelled. The disclosure implements simultaneous ringing and group-calling in a CTD service, expands the function of an existing CTD service and meets various user demands.

### BRIEF DESCRIPTION OF THE DRAWINGS

- Fig. 1: is a schematic diagram of a structure of network elements of the disclosure;
- Fig. 2: is a flowchart of signalling implemented in a traditional CTD service;
- Fig. 3: is a logic flow chart of implementing the disclosure; and
- Fig. 4: is a flowchart of signalling in specific implementation of the disclosure.

### DETAILED DESCRIPTION

To clearly show a technical problem to be solved, a technical solution, and beneficial effects of the present disclosure, the present disclosure is further elaborated below with reference to the drawings and embodiments.

In embodiments of the disclosure, simultaneous ringing and group-calling is implemented in a CTD service, i.e., on the basis of a traditional CTD service, extension is made from a single logic called number to multiple logic called numbers forming a list of logic callees. After logging in a CTD WEB interface, a user inputs or selects the number of a logic caller such as user A and a list of logic callees such as users B1, B2,...; a CTD application server first calls the number of the logic caller i.e. user A, and after A answers the call, the CTD application server simultaneously calls all logic callees B1, B2,...; when any one of the logic callees rings, the CTD application sever plays a ring-back tone to the user A; and when a logic callee picks up the call, a phone call between the user A and the logic callee who picks up the call is established via the CTD application server, and in the mean time any other logic callee is cancelled.

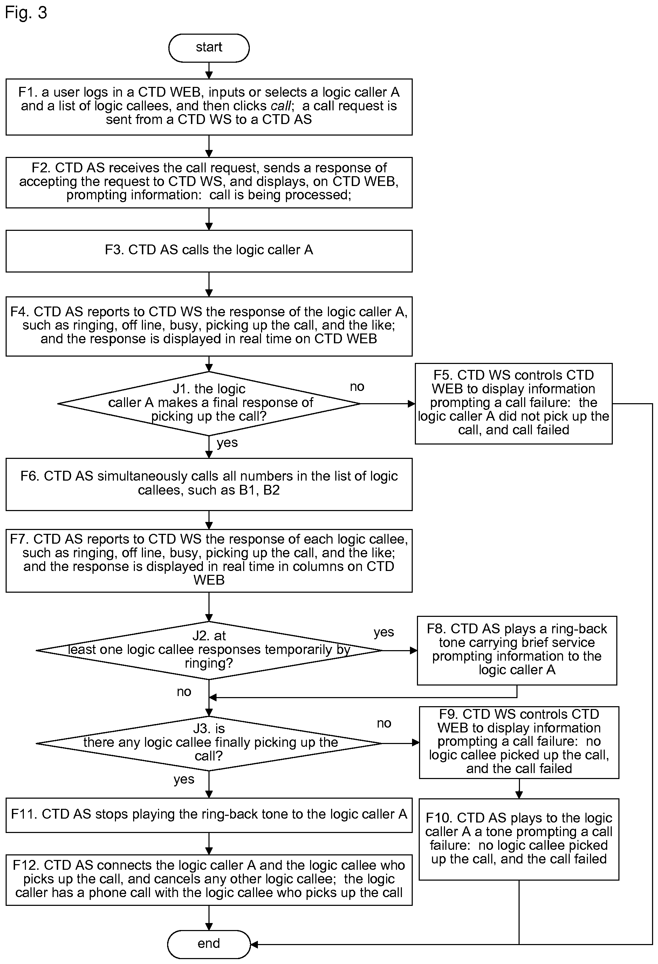

Fig. 3 is a flow chart of a method for simultaneous ringing and group-calling in a CTD service provided by an embodiment of the disclosure.

At step F1, a user logs in a CTD WEB, inputs or selects a logic caller A and a list of logic callees, and then click *call;* a call request is sent to a CTD AS from a CTD WS, wherein the call request includes the logic caller number and the list of logic callee numbers.

At step F2, after receiving the call request, the CTD AS sends a response of accepting the request to the CTD WS, and displays, on the CTD WEB, prompting information: call is being processed.

At step F3, the CTD AS calls the logic caller A.

At step F4, the CTD AS reports to CTD WS the response of the logic caller A, such as ringing, off line, busy, picking up the call, and the like; and the response is displayed in real time on the CTD WEB.

At step J1, if the logic caller A makes a final response of picking up the call, then step F6 is executed, otherwise step F5 is executed.

At step F5, the CTD WS controls the CTD WEB to display information prompting a call failure: the logic caller A did not pick up the call, and the call failed; the flow terminates.

At step F6, the CTD AS simultaneously calls all numbers in the list of logic callees, such as B1, B2,....

At step F7, the CTD AS reports to CTD WS the response of each logic callee, such as ringing, off line, busy, picking up the call, and the like; and the response is displayed in real time in columns on the CTD WEB.

At step J2, if at least one logic callee responses temporarily by ringing, then step F8 is executed, otherwise step J3 is executed.

At step F8, the CTD AS plays a ring-back tone carrying brief service prompting information to the logic caller A.

At step J3, if a logic callee finally picks up the call, then step F11 is executed, otherwise step F9 is executed.

At step F9, the CTD WS controls the CTD WEB to display information prompting a call failure: no logic callee picked up the call, and the call failed.

At step F10, the CTD AS plays to the logic caller A a tone prompting a call failure: no logic callee picked up the call, and the call failed; the flow terminates.

At step F11, the CTD AS stops playing the ring-back tone to the logic caller A.

At step F12, the CTD AS connects the logic caller A and the logical callee who picks up the call, and cancels all of any other logic callee; the logic caller has a phone call with the logic callee who picks up the call; the flow terminates.

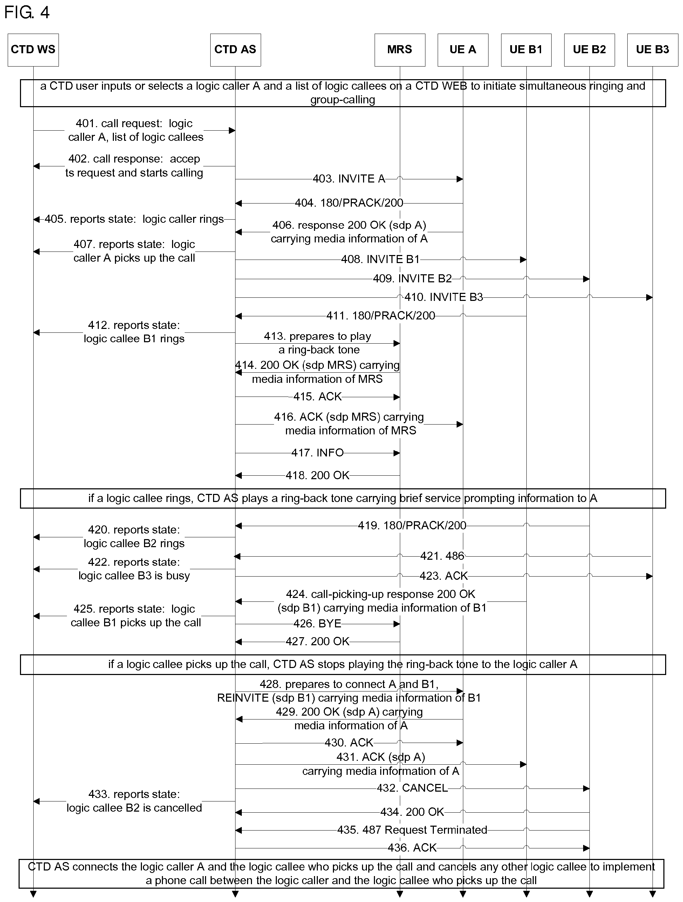

Fig. 4 is a flowchart of signalling of simultaneous ringing and group-calling in a CTD service provided by embodiments of the disclosure, the flow of signalling (numbered in chronological order) is elaborated as follows.

At step 401, a CTD WS sends a CTD AS a call request for simultaneous ringing and group-calling, the call request carrying some information on the call, such as the number of a logic caller A, a list of logic callees B1, B2, B3 and the like.

At step 402, the CTD AS returns to the CTD WS a call response for simultaneous ringing and group-calling indicating that the call is being processed.

At step 403, the CTD AS sends UE A a request INVITE to call the logic caller.

At step 404, the UE A rings, and returns to the CTD AS a 180 Provisional Response ACKnowledgement 180/PRACK/200, if the 180 is reliable, then the CTD AS is required to return a provisional acknowledgement PRACK to the UE A, and the UE A replies 200 OK (PRACK) to the CTD AS.

At step 405, the CTD AS notifies the CTD WS of a state that the logic caller A rings.

In this step and the following steps, after the CTD WS receives the state reported by the CTD AS, the CTD WS displays the current states of the logic caller and each logic callee before a user such that the user may easily learn the current progress of the call.

At step 406, the UE A picks up the call, and replies the CTD AS with a 200 OK carrying the media information of the UE A itself in response to the request INVITE.

At step 407, the CTD AS notifies the CTD WS of a state that the logic caller A picks up the call.

At step 408, the CTD AS sends a request INVITE to a UE B1 to call the logic-callee UE B1.

At step 409, the CTD AS sends a request INVITE to the UE B2 to call the logic-callee UE B2.

At step 410, the CTD AS sends a request INVITE to the UE B3 to call the logic-callee UE B3.

At step 411, the UE B1 rings, and returns a 180 Provisional Response ACKnowledgement 180/PRACK/200 to the CTD AS; if the 180 is reliable, then the CTD AS is required to return a provisional acknowledgement PRACK to the UE B1, and the UE B1 replies 200 OK (PRACK) to the CTD AS.

At step 412, the CTD AS notifies the CTD WS of a state that the logic callee B1 rings.

At step 413, the CTD AS prepares to play a ring-back tone to the logic caller A, and sends a request INVITE carrying the media information of UE A to an MRS.

At step 414, in response to the request INVITE in preparation for playing the ring-back tone, the MRS replies the CTD AS with a 200 OK carrying the media information of the MRS itself.

At step 415, the CTD AS sends an acknowledgment ACK to the MRS.

At step 416, the CTD AS sends the UE A an acknowledgment ACK carrying the media information of the MRS.

At step 417, the CTD AS sends an instruction INFO instructing the MRS to play back.

At step 418, the MRS replies the CTD AS with a 200 OK in response to INFO, and now the UE A hears the ring-back tone.

At step 419, the UE B2 rings, and returns a 180 Provisional Response ACKnowledgement 180/PRACK/200 to the CTD AS; if the 180 is reliable, then the CTD AS is required to return a provisional acknowledgement PRACK to the UE B2, and the UE B2 replies 200 OK (PRACK) to the CTD AS.

At step 420, the CTD AS notifies the CTD WS of a state that the logic callee B2 rings.

At step 421, the UE B3 is busy, and replies the CTD AS with a response 486.

At step 422, the CTD AS notifies the CTD WS of a state that the logic callee B3 is busy.

At step 423, the CTD AS sends an acknowledgment ACK to the UE B3.

At step 424, the UE B1 picks up the call and replies the CTD AS with a 200 OK (INVITE) carrying media information of UE B1 itself.

At step 425, the CTD AS notifies the CTD WS of a state that the logic callee B1 picks up the call.

At step 426, the CTD AS stops playing the ring-back tone to the UE A, and sends a request BYE to the MRS.

At step 427, the MRS replies he CTD AS with a 200 OK (BYE).

At step 428, the CTD AS prepares to connect the logic caller A and the logic callee B1 who picks up the call; the CTD AS sends the UE A a request REINVITE carrying the media information of the UE B1.

At step 429, the UE A replies the CTD AS with a 200 OK (REINVITE) carrying media information of UE A.

At step 430, the CTD AS sends an acknowledgment ACK to the UE A.

At step 431, the CTD AS sends the UE B1 an acknowledgment ACK carrying the media information of the UE A; the UE A completes media interaction with UE B1, and UEs A and B1 starts to have a phone call.

At step 432, the CTD AS is required to cancel any logic callee other than the logic callee who picks up the call, i.e., CTD AS is further required to cancel the UE B2 by sending a request CANCEL to the UE B2.

At step 433, the CTD AS notifies the CTD WS of a state that the logic callee B2 is cancelled.

At step 434, the UE B2 replies the CTD AS with a 200 OK (CANCEL).

At step 435, the UE B2 replies the CTD AS with a 487 Request Terminated.

At step 436, the CTD AS sends an acknowledgment ACK to the UE B2. At this moment, the CTD AS has established a connection between the logic caller A and the logic callee who picks up the call, cancelled any other logic callee, and implemented a phone call between the logic caller and the logic callee who picks up the call.

Based on the flows of the method and signalling for simultaneous ringing and group-calling in a CTD service provided by the embodiments, an embodiment of the disclosure further provides a system for simultaneous ringing and group-calling in a CTD service, the modular functional structure of the system is still based on the structure of an existing CTD service system shown in Fig. 1, with the difference that with the disclosure, the functions of the CTD WS, CTD AS and MRS in the existing CTD system are extended, such that simultaneous ringing and group-calling is implemented; the function of each module in the system may be derived directly from the aforementioned flows of the method and signalling, and is thereby not repeated.

The disclosure implements, in a CTD service, the function of simultaneous ringing and group-calling, which function is a B2B (back-to-back) calling service, and an extension and innovation of the traditional CTD function, with advantages as follows.
(1) Signalling is controlled by the CTD application server; calling is initiated from the CTD application server; and call signalling goes through a NGN network or IMS network without any specific UE. Hence, a logic caller and a logic callee are not restricted by a UE type, a UE of any existing type may serve as a logic caller or logic callee.
(2) Group-calling is implemented, wherein multiple logical callees may be called simultaneously, i.e., as for the original user B, extension is made from one logic called user to multiple logic called users B1, B2,...; any logic callee may have a phone call with the logic caller user once the logic callee picks up the call.
(3) Simultaneous ringing is implemented, wherein as the CTD application server initiates a call request to multiple logic callees simultaneously, multiple logic callees may ring simultaneously; such a function may be used widely for example in an emergency wherein an important figure having multiple phone numbers has to be contacted, or a case of a category of contacts wherein it is sufficient to contact any one in the category.
(4) Real-time display of the state of each phone number including that of the logic caller and each logic callee, such as ringing, busy, refusing to answer, no reply, picking up the call, cancel, etc, is supported.

What describe are merely preferred embodiments of the disclosure, and are not intended to limit the scope of the disclosure.

### INDUSTRIAL APPLICABILITY

With the disclosure, a CTD Application Server (CTD AS) performs signalling control, such that extension is made from one logic callee to multiple logic called users, enabling simultaneous calling of multiple logic callees, wherein the multiple logic callees receiving the call ring simultaneously. The disclosure implements simultaneous ringing and group-calling in a CTD service, expands the function of an existing CTD service and meets various user demands.

the disclosure further provides a system for simultaneous ringing and group-calling in a CTD service, the modular functional structure of the system is still based on the structure of an existing CTD service system shown in Fig. 1, with the difference that with the disclosure, the functions of the CTD WS, CTD AS and MRS in the existing CTD system are extended, such that simultaneous ringing and group-calling is implemented; the function of each module in the system may be derived directly from the aforementioned flows of the method and signalling, and is thereby not repeated.

The disclosure implements, in a CTD service, the function of simultaneous ringing and group-calling, which function is a B2B (back-to-back) calling service, and an extension and innovation of the traditional CTD function, with advantages as follows.
(1) Signalling is controlled by the CTD application server; calling is initiated from the CTD application server; and call signalling goes through a NGN network or IMS network without any specific UE. Hence, a logic caller and a logic callee are not restricted by a UE type, a UE of any existing type may serve as a logic caller or logic callee.
(2) Group-calling is implemented, wherein multiple logical callees may be called simultaneously, i.e., as for the original user B, extension is made from one logic called user to multiple logic called users B1, B2,...; any logic callee may have a phone call with the logic caller user once the logic callee picks up the call.
(3) Simultaneous ringing is implemented, wherein as the CTD application server initiates a call request to multiple logic callees simultaneously, multiple logic callees may ring simultaneously; such a function may be used widely for example in an emergency wherein an important figure having multiple phone numbers has to be contacted, or a case of a category of contacts wherein it is sufficient to contact any one in the category.
(4) Real-time display of the state of each phone number including that of the logic caller and each logic callee, such as ringing, busy, refusing to answer, no reply, picking up the call, cancel, etc, is supported.

What describe are merely preferred embodiments of the disclosure, and are not intended to limit the scope of the disclosure.

### INDUSTRIAL APPLICABILITY

With the disclosure, a CTD Application Server (CTD AS) performs signalling control, such that extension is made from one logic callee to multiple logic called users, enabling simultaneous calling of multiple logic callees, wherein the multiple logic callees receiving the call ring simultaneously. The disclosure implements simultaneous ringing and group-calling in a CTD service, expands the function of an existing CTD service and meets various user demands.

## Claims

1. A method for group-calling in a *Click To Dial* CTD service, comprising:
receiving (F1, 401), by a CTD Application Server CTD AS, a call request sent by a CTD WEB Server CTD WS, wherein the call request comprises the number of a first party and a list of second parties input or selected by a user from a CTD WEB interface;
calling (F3, 403), by the CTD AS, the first party by sending a request INVITE to the first party; and after the first party picks up the call, group-calling (F6, 408-410) all second parties in the list of second parties by sending a request INVITE to each second party in the list of second parties simultaneously;
when a second party in the list of second parties picks up the call, connecting (F12, 428), by the CTD AS, the first party and the second party who picks up the call, and sending (F12, 432) a request CANCEL to any second party other than the second party who picks up the call,
wherein the CTD AS reports (F4, 405, 407; F7, 412, 420, 422, 425) states of the first party and the second parties to the CTD WS in real time, such that the CTD WS displays states of the first party and the second parties before the user in real time.

2. The method according to claim 1, further comprising:
playing (F8, 413∼418), by the CTD AS, a ring-back tone to the first party when the first party picks up the call and the CTD AS determines that at least one second party responses temporarily by ringing; and
stopping playing (F11, 426), by the CTD AS, the ring-back tone to the first party when the CTD AS determines that a second party in the list of second parties picks up the call.

3. The method according to claim 1, further comprising:
when the CTD AS determines that no second party in the list of second parties picks up the call, playing (F10), by the CTD AS, a tone prompting a call failure to the first party, and terminating the flow of calling.

4. A system for group-calling in a *Click To Dial* CTD service, comprising a CTD WEB Server CTD WS (2), a Media Resource Server MRS (4) and a CTD Application Server CTD AS (3), wherein
the CTD WS (2) is configured to send the CTD AS (3) a call request comprising the number of a first party and a list of second parties input or selected by a user from a CDT web interface; and
the CTD AS (3) is configured to: call the first party by sending a request INVITE to the first party, and after the first party picks up the call, group-call all second parties in the list of second parties by sending a request INVITE to each second party in the list of second parties simultaneously; when a second party in the list of second parties picks up the call, connect the first party and the second party who picks up the call, and send a request CANCEL to any second party other than the second party who picks up the call,
wherein the CTD AS is further configured to report states of the first party and the second parties to the CTD WS in real time, and the CTD WS is further configured to display states of the first party and the second parties before the user in real time.

5. The system according to claim 4, wherein the CTD AS is further configured to:
play a ring-back tone to the first party when the first party picks up the call and at least one second party responses temporarily by ringing; and stop playing the ring-back tone to the first party when a second party in the list of second parties picks up the call.

6. Then system according to claim 4, wherein the CTD AS is further configured to:
when the CTD AS determines that no second party in the list of second parties picks up the call, play a tone prompting a call failure to the first party, and terminate the flow of calling.

## Patentansprüche

1. Verfahren zum Tätigen eines Gruppenanrufs in einem *Klicken-zum-Wählen,* CTD,-Dienst, umfassend:
Empfangen (F1, 401) durch einen CTD-Anwendungsserver, CTD-AS, einer Anrufanforderung, die durch einen CTD-WEB-Server, CTD-WS, gesendet wird, wobei die Anrufanforderung die Nummer eines ersten Teilnehmers und eine Liste von zweiten Teilnehmern umfasst, die durch einen Benutzer von einer CTD-WEB-Schnittstelle eingegeben oder ausgewählt werden;
Anrufen (F3, 403) durch den CTD-AS des ersten Teilnehmers durch Senden einer INVITE-Anforderung an den ersten Teilnehmer; und Tätigen nach dem Entgegennehmen des Anrufs durch den ersten Teilnehmer eines Gruppenanrufs (F6, 408-410) an alle zweiten Teilnehmer in der Liste von zweiten Teilnehmern durch gleichzeitiges Senden einers INVITE-Anforderung an jeden zweiten Teilnehmer in der Liste von zweiten Teilnehmern;
Verbinden (F12, 428), wenn ein zweiter Teilnehmer in der Liste von zweiten Teilnehmern den Anruf entgegennimmt, des ersten Teilnehmers und des zweiten Teilnehmers, der den Anruf entgegennimmt, durch den CTD-AS und Senden (F12, 432) einer CANCEL-Anforderung an jeden zweiten Teilnehmer außer dem zweiten Teilnehmer, der den Anruf entgegennimmt,
wobei der CTD-AS Zustände des ersten Teilnehmers und der zweiten Teilnehmer dem CTD-WS in Echtzeit meldet (F4, 405, 407; F7, 412, 420, 422, 425), derart dass der CTD-WS Zustände des ersten Teilnehmers und der zweiten Teilnehmer vor dem Benutzer in Echtzeit anzeigt.

2. Verfahren nach Anspruch 1, ferner umfassend:
Wiedergeben (F8, 413-418) durch den CTD-AS eines Rückruftons an den ersten Teilnehmer, wenn der erste Teilnehmer den Anruf entgegennimmt und der CTD-AS bestimmt, dass mindestens ein zweiter Teilnehmer temporär durch Rufzeichen antwortet; und
Stoppen des Wiedergebens (F11, 426) des Rückruftons an den ersten Teilnehmer durch den CTD-AS, wenn der CTD-AS bestimmt, dass ein zweiter Teilnehmer in der Liste von zweiten Teilnehmern den Anruf entgegennimmt.

3. Verfahren nach Anspruch 1, ferner umfassend:
Wiedergeben (F10) durch den CTD-AS, wenn der CTD-AS bestimmt, dass kein zweiter Teilnehmer in der Liste von zweiten Teilnehmern den Anruf entgegennimmt, eines Tons, der dem ersten Teilnehmer einen Anruffehlschlag bestätigt, und Beenden des Anrufflusses.

4. System zum Tätigen eines Gruppenanrufs in einem *Klicken-zum-Wählen,* CTD,-Dienst, umfassend:
einen CTD-WEB-Server, CTD-WS, (2), einen Medienressourcenserver, MRS, (4) und einen CTD-Anwendungsserver, CTD-AS, (3), wobei
der CTD-WS (2) so konfiguriert ist, dass er eine Anrufanforderung an den CTD-AS (3) sendet, welche die Nummer eines ersten Teilnehmers und eine Liste von zweiten Teilnehmern umfasst, die durch einen Benutzer von einer CTD-Webschnittstelle eingegeben oder ausgewählt werden; und
wobei der CTD-AS (3) konfiguriert ist zum:
Anrufen des ersten Teilnehmers durch Senden einer INVITE-Anforderung an den ersten Teilnehmer, und Tätigen nach dem Entgegennehmen des Anrufs durch den ersten Teilnehmer eines Gruppenanrufs an alle zweiten Teilnehmer in der Liste von zweiten Teilnehmern durch gleichzeitiges Senden einer INVITE-Anforderung an jeden zweiten Teilnehmer in der Liste von zweiten Teilnehmern; Verbinden, wenn ein zweiter Teilnehmer in der Liste von zweiten Teilnehmern den Anruf entgegennimmt, des ersten Teilnehmers und des zweiten Teilnehmers, der den Anruf entgegennimmt; und Senden einer CANCEL-Anforderung an jeden zweiten Teilnehmer außer dem zweiten Teilnehmer, der den Anruf entgegennimmt,
wobei der CTD-AS ferner so konfiguriert ist, dass er Zustände des ersten Teilnehmers und der zweiten Teilnehmer dem CTD-WS in Echtzeit meldet, und der CTD-WS ferner so konfiguriert ist, dass er Zustände des ersten Teilnehmers und der zweiten Teilnehmer vor dem Benutzer in Echtzeit anzeigt.

5. System nach Anspruch 4, wobei der CTD-AS ferner konfiguriert ist zum:
Wiedergeben eines Rückruftons an den ersten Teilnehmer, wenn der erste Teilnehmer den Anruf entgegennimmt und mindestens ein zweiter Teilnehmer temporär durch Rufzeichen antwortet; und Stoppen des Wiedergebens des Rückruftons an den ersten Teilnehmer, wenn ein zweiter Teilnehmer in der Liste von zweiten Teilnehmern den Anruf entgegennimmt.

6. System nach Anspruch 4, wobei der CTD-AS ferner konfiguriert ist zum:
Wiedergeben, wenn der CTD-AS bestimmt, dass kein zweiter Teilnehmer in der Liste von zweiten Teilnehmern den Anruf entgegennimmt, eines Tons, der dem ersten Teilnehmer einen Anruffehlschlag bestätigt, und Beenden des Anrufflusses.

## Revendications

1. Procédé d'appel de groupe dans un service de type « *cliquer pour composer* », CTD, comprenant les étapes ci-dessous consistant à :
recevoir (F1, 401), par le biais d'un serveur d'application CTD, CTD AS, une demande d'appel envoyée par un serveur web CTD, CTD WS, dans lequel la demande d'appel comprend le numéro d'une première partie et une liste de secondes parties, saisis ou sélectionnés par un utilisateur, à partir d'une interface web CTD ;
appeler (F3, 403), par le biais du serveur CTD AS, la première partie, en envoyant une demande d'invitation « INVITE » à la première partie ; et, dès lors que la première partie répond à l'appel, effectuer un appel de groupe (F6, 408-410) de la totalité des secondes parties dans la liste de secondes parties, en envoyant une demande d'invitation « INVITE » à chaque seconde partie dans la liste de secondes parties simultanément ;
lorsqu'une seconde partie dans la liste de secondes parties répond à l'appel, connecter (F12, 428), par le biais du serveur CTD AS, la première partie et la seconde partie qui répond à l'appel, et envoyer (F12, 432) une demande d'annulation « CANCEL » à toute seconde partie distincte de la seconde partie qui répond à l'appel ;
dans lequel le serveur CTD AS signale (F4, 405, 407 ; F7, 412, 420, 422, 425) des états de la première partie et des secondes parties au serveur CTD WS en temps réel, de sorte que le serveur CTD WS affiche des états de la première partie et des secondes parties avant l'utilisateur en temps réel.

2. Procédé selon la revendication 1, comprenant en outre les étapes ci-dessous consistant à :
émettre (F8, 413-418), par le biais du serveur CTD AS, une tonalité de rappel, à la première partie, lorsque la première partie répond à l'appel, et lorsque le serveur CTD AS détermine qu'au moins une seconde partie répond temporairement par une sonnerie ; et
arrêter d'émettre (F11, 426), par le biais du serveur CTD AS, la tonalité de rappel, à la première partie, lorsque le serveur CTD AS détermine qu'une seconde partie dans la liste de secondes parties répond à l'appel.

3. Procédé selon la revendication 1, comprenant en outre l'étape ci-dessous consistant à :
lorsque le serveur CTD AS détermine qu'aucune seconde partie dans la liste de secondes parties ne répond à l'appel, émettre (F10), par le biais du serveur CTD AS, une tonalité annonçant un échec d'appel à la première partie, et mettre fin au flux d'appel.

4. Système pour un appel de groupe dans un service de type « *cliquer pour composer* », CTD, comprenant :
un serveur web CTD, CTD WS, (2), un serveur de ressources multimédias, MRS, (4), et un serveur d'application CTD, CTD AS, (3), dans lequel
le serveur CTD WS (2) est configuré de manière à envoyer, au serveur CTD AS (3), une demande d'appel comprenant le numéro d'une première partie et une liste de secondes parties, saisis ou sélectionnés par un utilisateur d'une interface web CDT ; et
le serveur CTD AS (3) est configuré de manière à : appeler la première partie, en envoyant une demande d'invitation « INVITE » à la première partie, et, dès lors que la première partie répond à l'appel, effectuer un appel de groupe de la totalité des secondes parties dans la liste de secondes parties, en envoyant une demande d'invitation « INVITE » à chaque seconde partie dans la liste de secondes parties, simultanément ; lorsqu'une seconde partie dans la liste de secondes parties répond à l'appel, connecter la première partie et la seconde partie qui répond à l'appel, et envoyer une demande d'annulation « CANCEL » à toute seconde partie distincte de la seconde partie qui répond à l'appel ;
dans lequel le serveur CTD AS est configuré de manière à signaler des états de la première partie et des secondes parties au serveur CTD WS en temps réel, et le serveur CTD WS est en outre configuré de manière à afficher des états de la première partie et des secondes parties avant l'utilisateur en temps réel.

5. Système selon la revendication 4, dans lequel le serveur CTD AS est en outre configuré de manière à : émettre une tonalité de rappel, à la première partie, lorsque la première partie répond à l'appel, et lorsqu'au moins une seconde partie répond temporairement par une sonnerie ; et arrêter d'émettre la tonalité de rappel, à la première partie, lorsqu'une seconde partie dans la liste de secondes parties répond à l'appel.

6. Système selon la revendication 4, dans lequel le serveur CTD AS est en outre configuré de manière à : lorsque le serveur CTD AS détermine qu'aucune seconde partie dans la liste de secondes parties ne répond à l'appel, émettre une tonalité annonçant un échec d'appel à la première partie et mettre fin au flux d'appel.
